# EUROPÄISCHE PATENTSCHRIFT

(11) **EP 3 629 548 B1**
(45) Veröffentlichungstag und Bekanntmachung des Hinweises auf die Patenterteilung: **07.07.2021**
(21) Anmeldenummer: 18196595.5
(22) Anmeldetag: 25.09.2018
(51) Int. Cl.: H04L 29/08, H04L 12/911

(54) **VERFAHREN ZUR DATENÜBERMITTLUNG INNERHALB EINES INDUSTRIELLEN KOMMUNIKATIONSNETZES UND KOMMUNIKATIONSGERÄT**
METHOD FOR TRANSMITTING DATA WITHIN AN INDUSTRIAL COMMUNICATION NETWORK AND COMMUNICATION DEVICE
PROCÉDÉ DE TRANSMISSION DE DONNÉES DANS UN RÉSEAU DE COMMUNICATION INDUSTRIEL ET APPAREIL DE COMMUNICATION

(43) Veröffentlichungstag der Anmeldung: 01.04.2020
(73) Patentinhaber: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(56) Entgegenhaltungen:
- Ahmed Nasrallah ET AL: "Ultra-Low Latency (ULL) Networks: The IEEE TSN and IETF DetNet Standards and Related 5G ULL Research", IEEE Communications Surveys & Tutorials, 7. September 2018 (2018-09-07), Seiten 1-1, XP055560817, DOI: 10.1109/COMST.2018.2869350 Gefunden im Internet: URL:https://arxiv.org/pdf/1803.07673.pdf [gefunden am 2019-02-22]

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Multicast-Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Multicast-Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist entsprechend Standard IEEE 802.1Qav eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qbv sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In der älteren internationalen Patentanmeldung WO 2019/007516 A1 ist ein Verfahren zur Datenübermittlung beschrieben, bei dem ausgewählte Datagramme innerhalb eines Automatisierungsnetzes bevorzugt und in regelmäßigen Zeitintervallen übermittelt werden. Die ausgewählten Datagramme werden von einem Datensender zu einem Datenempfänger jeweils zumindest über einen ersten Vermittlungsknoten über einen zweiten Vermittlungsknoten übermittelt wird. Für eine Übermittlung der ausgewählten Datagramme zwischen dem ersten Vermittlungsknoten und dem zweiten Vermittlungsknoten wird jeweils ein Zeitfenster, insbesondere ein TDMA-Zeitfenster, exklusiv reserviert, dessen Beginn in allen Vermittlungsknoten zeitsynchronisiert ist. Das exklusiv reservierte Zeitfenster umfasst ein Latenzabhängiges Schutzintervall, dessen Länge entsprechend der Latenz entlang eines längsten Pfades innerhalb des Automatisierungsnetzes bemessen ist. Bei Datenströmen, die im Vergleich zum längsten Pfad über relativ kurze Pfade übermittelt werden, kann das Schutzintervall mitunter unnötig lang bemessen sein, so dass grundsätzlich zur Verfügung stehende Ressourcen zur Datenübermittlung nicht effizient genutzt werden.

Aus "Ultra-Low Latency (ULL) Networks: The IEEE TSN and IETF DetNet Standardsand Related 5G ULL Research", Ahmed Nasrallah et al., IEEE Communications Surveys & Tutorials, 7. September 2018 ist ein Verfahren bekannt, bei dem ausgewählte Datagramme von ersten Kommunikationsgeräten an Quell-Netzknoten zu zweiten Kommunikationsgeräten an Ziel-Netzknoten innerhalb vorgegebener Zeitintervalle übermittelt werden. Dabei werden die vorgegebenen Zeitintervalle an allen Netzknoten synchronisiert.

Der vorliegenden Erfindung liegt daher die Aufgabe zugrunde, ein effizientes Verfahren zur Datenübermittlung insbesondere innerhalb eines industriellen Automatisierungsnetzes zu schaffen, das eine priorisierte Übermittlung ausgewählter Datagramme unter Berücksichtigung erforderlicher Schutzintervalle ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Kommunikationsgerät mit den in Anspruch 12 angegebenen Merkmalen gelöst. Vorteilhafte Weiterbildungen sind in den abhängigen Ansprüchen angegeben.

Entsprechend dem erfindungsgemäßen Verfahren werden ausgewählte Datagramme von an Quell-Netzknoten angeschlossenen ersten Kommunikationsgeräten zu an Ziel-Netzknoten angeschlossenen zweiten Kommunikationsgeräten innerhalb vorgegebener Zeitintervalle übermittelt. Dabei werden die vorgegebenen Zeitintervalle an allen Netzknoten synchronisiert. Vorzugsweise sind die ersten Kommunikationsgeräte über ein Time-sensitive Network, insbesondere entsprechend IEEE 802.1 Q und IEEE 802.1 Qbv, mit den zweiten Kommunikationsgeräten verbunden.

Erfindungsgemäß wird für eine Weiterleitung der ausgewählten Datagramme jeweils eine Anzahl von Netzknoten vom jeweiligen Quell-Netzknoten zum jeweiligen Ziel-Netzknoten ermittelt. Die ausgewählten Datagramme werden bei einer zumindest einem vorgegebenen Schwellwert entsprechenden ermittelten Anzahl von Netzknoten während erster periodischer Zeitintervalle mit einer ersten Schutzintervall-Länge übermittelt. Dagegen werden die ausgewählten Datagramme bei einer unter dem Schwellwert liegenden ermittelten Anzahl während zweiter periodischer Zeitintervalle mit einer zweiten Schutzintervall-Länge übermittelt, die kürzer als die erste Schutzintervall-Länge ist. Die erste Schutzintervall-Länge und die zweite Schutzintervall-Länge werden vorzugsweise in Abhängigkeit von ermittelten Latenzen bei einer Übermittlung der ausgewählten Datagramme von den Quell-Netzknoten zu den Ziel-Netzknoten festgelegt. Auf diese Weise kann für Kommunikationsnetze mit wenigen Verbindungen, die eine größere Hop-Anzahl aufweisen, ein Ressourcenzuteilungsmodell realisiert werden, das eine effiziente Übermittlung von Datenströmen über Verbindungen ermöglicht, die nur eine relativ geringe Hop-Anzahl aufweisen. Für letztgenannte Verbindungen kann nämlich ein verkürztes Schutzintervall vorgesehen werden, so dass bislang im Wesentlichen ungenutzte System-Ressourcen anderweitig allokiert werden können.

Entsprechend einer vorteilhaften Ausgestaltung der vorliegenden Erfindung werden die ausgewählten Datagramme bei einer zumindest dem vorgegebenen Schwellwert entsprechenden ermittelten Anzahl von Netzknoten einer ersten Kategorie bzw. Klasse zugeordnet, für deren Übermittlung erste System-Ressourcen innerhalb des Kommunikationsnetzes reserviert werden. Dagegen werden die ausgewählten Datagramme bei einer unter dem Schwellwert liegenden ermittelten Anzahl einer zweiten Kategorie bzw. Klasse zugeordnet, für deren Übermittlung zweite System-Ressourcen innerhalb des Kommunikationsnetzes reserviert werden. Vorzugsweise werden für ausgewählte Datagramme der ersten Kategorie und für ausgewählte Datagramme der zweiten Kategorie jeweils Kategorie-spezifische Time-aware Shaper gemäß IEEE 802.1 Qbv verwendet. Insbesondere kann zwischen den ersten Zeitintervallen und den zweiten Zeitintervallen jeweils ein Pausen-Zeitfenster vorgesehen sein.

Die ausgewählten Datagramme werden entsprechend einer besonders bevorzugten Ausgestaltung der vorliegenden Erfindung als Multicast-Datenströme über Zwischen-Netzknoten umfassende Pfade übermittelt. Zur Reservierung von durch dritte Kommunikationsgeräte an Zwischen-Netzknoten bereitzustellenden Ressourcen spezifizieren an die ersten Kommunikationsgeräte angeschlossene Kommunikationsendgeräte jeweils Dienstgüteparameter für die Multicast-Datenströme. Auf Basis dessen spezifizieren an die zweiten Kommunikationsgeräte angeschlossene Kommunikationsendgeräte für eine Reservierungsanfrage jeweils einen Multicast-Datenstrom-Identifikator. Den an Quell-Netzknoten angeschlossenen Kommunikationsendgeräten kann beispielsweise jeweils eine Talker-Funktion zugeordnet sein, während den an Ziel-Netzknoten angeschlossenen Kommunikationsendgeräten jeweils eine Listener-Funktion zugeordnet sein kann.

Darüber hinaus überprüfen bzw. überprüft die dritten Kommunikationsgeräte bzw. eine übergeordnete Steuerungseinrichtung bei einer Reservierungsanfrage vorteilhafterweise jeweils, ob in den dritten Kommunikationsgeräten entlang des jeweiligen Pfades ausreichende Ressourcen zur Datenübermittlung unter Einhaltung der spezifizierten Dienstgüteparameter verfügbar sind. Bei ausreichenden Ressourcen wird vorzugsweise jeweils eine dem spezifizierten Multicast-Datenstrom-Identifikator zugeordnete Multicast-Adresse an ein anfragendes, an einen Ziel-Netzknoten angeschlossenes Kommunikationsendgerät übermittelt. Die durch die dritten Kommunikationsgeräte bereitzustellenden Ressourcen können insbesondere Bandbreite, Queue-Anzahl, Queue-Cache bzw. Adress-Cache des jeweiligen dritten Kommunikationsgeräts umfassen. Vorzugsweise werden die Reservierungsanfragen entsprechend IEEE 802.1Qcc behandelt.

Das erfindungsgemäße Kommunikationsgerät ist zur Durchführung des Verfahrens entsprechend vorangehenden Ausführungen geeignet und umfasst mehrere Anschlüssen zur Verbindung mit weiteren Kommunikationsgeräten sowie ein einem Koppelelement, durch das die Anschlüsse schaltbar miteinander verbindbar sind. Das Kommunikationsgerät ist dafür ausgestaltet und eingerichtet, ausgewählte Datagramme von Quell-Netzknoten zu Ziel-Netzknoten innerhalb vorgegebener Zeitintervalle zu übermitteln und die vorgegebenen Zeitintervalle mit Kommunikationsgeräten an anderen Netzknoten zu synchronisieren.

Darüber hinaus ist das erfindungsgemäße Kommunikationsgerät dafür ausgestaltet und eingerichtet, für eine Weiterleitung der ausgewählten Datagramme jeweils eine Anzahl von Netzknoten vom jeweiligen Quell-Netzknoten zum jeweiligen Ziel-Netzknoten zu ermitteln und die ausgewählten Datagramme bei einer zumindest einem vorgegebenen Schwellwert entsprechenden ermittelten Anzahl von Netzknoten während erster periodischer Zeitintervalle mit einer ersten Schutzintervall-Länge zu übermitteln und bei einer unter dem Schwellwert liegenden ermittelten Anzahl dagegen während zweiter periodischer Zeitintervalle mit einer zweiten Schutzintervall-Länge zu übermitteln, die kürzer als die erste Schutzintervall-Länge ist.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationsnetz eines industriellen Automatisierungssystems,
- Figur 2: eine schematische Darstellung von Zeitintervallen für eine Übermittlung von Datenströme über wenige bzw. viele Netzknoten,
- Figur 3: eine schematische Darstellung eines Gesamt-Zeitrahmens für eine periodische Übermittlung von Datenströmen und sonstigem Datenverkehr.

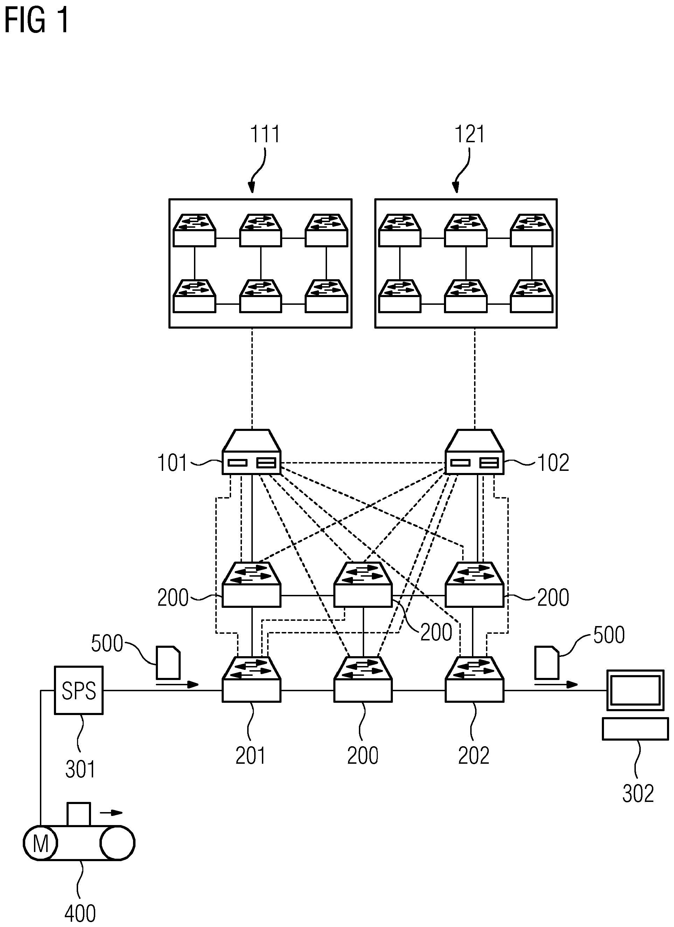

Das in Figur 1 dargestellte Kommunikationsnetz eines industriellen Automatisierungssystems umfasst mehrere Kommunikationsgeräte 200-202 und übergeordnete Steuerungseinheiten 101, 102. Die Kommunikationsgeräte 200-202 können beispielsweise Bridges, Switches oder Router sein und zum Anschluss von speicherprogrammierbaren Steuerungen 301, Eingabe/Ausgabe-Einheiten (I/O-Module) oder Bedien- und Beobachtungsstationen 302 des industriellen Automatisierungssystems dienen. Im vorliegenden Ausführungsbeispiel ist das die Kommunikationsgeräte 200-202 umfassende Kommunikationsnetz als Time-sensitive Network 200 entsprechend IEEE 802.1 Q und IEEE 802.1 Qbv, ausgestaltet.

Speicherprogrammierbare Steuerungen 301 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul ist eine speicherprogrammierbare Steuerung 301 beispielsweise mit einem Switch oder Router oder zusätzlich mit einem Feldbus verbunden. Die Eingabe/AusgabeEinheit dient einem Austausch von Steuerungs- und Messgrößen zwischen der speicherprogrammierbaren Steuerung 301 und einer durch die speicherprogrammierbare Steuerung 301 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 301 sind im vorliegenden Ausführungsbeispiel über ein Rückwandbus-System miteinander verbunden.

Eine Bedien- und Beobachtungsstation 302 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 302 zur Anzeige von Werten eines Regelungskreises und zur Veränderung von Regelungsparametern verwendet. Bedien- und Beobachtungsstationen 302 umfassen zumindest eine graphische Benutzerschnittstelle, ein Eingabegerät, eine Prozessoreinheit und ein Kommunikationsmodul.

Den Kommunikationsgeräten 200-202 ist im vorliegenden Ausführungsbeispiel eine übergeordnete optionale Steuerungsrichtung zugeordnet, die eine Haupt-Steuerungseinheit 101 und eine Reserve-Steuerungseinheit 102 umfasst. Die Haupt-Steuerungseinheit 101 und die Reserve-Steuerungseinheit 102 sind zueinander redundant. Insbesondere übernimmt die Haupt-Steuerungseinheit 101 dabei eine Master-Rolle, während der Reserve-Steuerungseinheit 102 eine Slave-Rolle zugewiesen ist. Die Steuerungseinheiten 101, 102 authentisieren sich vorzugsweise gegenüber den zugeordneten Kommunikationsgeräten 200-202 und erhalten nach erfolgreicher Authentifizierung Steuerungszugriff auf die zugeordneten Kommunikationsgeräte 200-202. Für jede Steuerungseinheit 101, 101 ist jeweils eine separate Ressourcensicht 111, 121 auf die Kommunikationsgeräten 200-202 vorgesehen.

Mittels erster Automatisierungsgeräte, die an Quell-Netzknoten angeschlossene Kommunikationsendgeräte darstellen und eine Talker-Funktion haben, werden Informationen bzw. Dienste über Multicast-Datenströme zur Nutzung an zweiten Automatisierungsgeräten bereitgestellt, die an Ziel-Netzknoten angeschlossene Kommunikationsendgeräte darstellen und eine Listener-Funktion haben. Einem Automatisierungsgerät kann gleichzeitig sowohl eine Talker-Funktion als auch eine Listener-Funktion haben, beispielsweise wenn es einerseits Automatisierungsdienste bereitstellt und andererseits Automatisierungsdienste anderer Geräte nutzt.

Im vorliegenden Ausführungsbeispiel hat die speicherprogrammierbare Steuerung 301 eine Talker-Funktion, während die Bedien- und Beobachtungsstation 302 eine Listener-Funktion aufweist und insbesondere durch die speicherprogrammierbare Steuerung 301 bereitgestellte Informationen empfängt. Grundsätzlich könnte die Bedien- und Beobachtungsstation 302 von der speicherprogrammierbaren Steuerung 301 empfangene Informationen analysieren und hieraus Steuerungsparameter für die speicherprogrammierbare Steuerung 301 vorgeben. Somit würden sowohl die speicherprogrammierbare Steuerung 301 als auch die Bedien- und Beobachtungsstation beide Funktionen wahrnehmen. Im Sinn einer vereinfachten Darstellung wird nachfolgend davon ausgegangen, dass beide Geräte jeweils nur eine zugeordnete Funktion aufweisen.

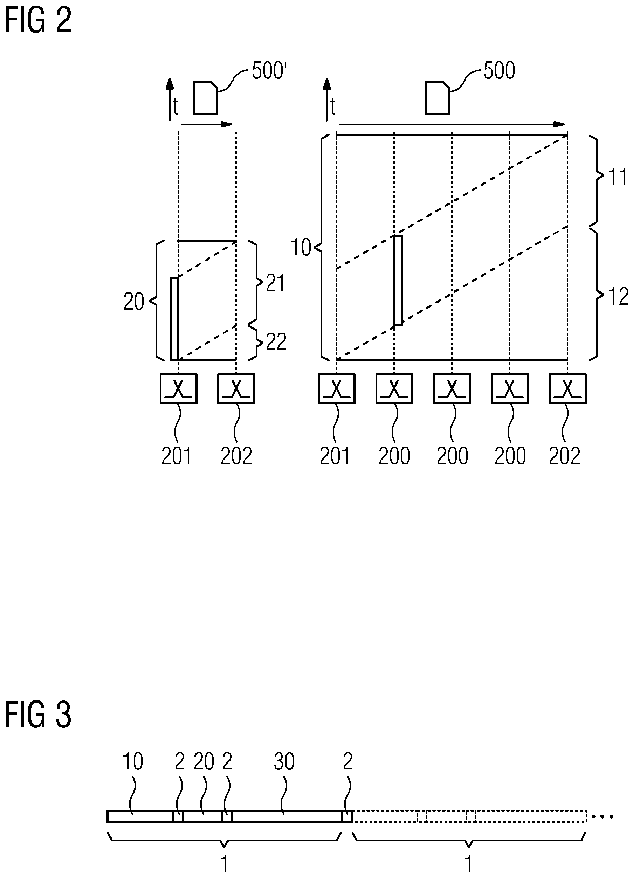

Entsprechend Figur 2 werden ausgewählte Datagramme 500, 500' werden im vorliegenden Ausführungsbeispiel als Multicast-Datenströme von ersten Kommunikationsgeräten 201 an Quell-Netzknoten zu zweiten Kommunikationsgeräten 202 an Ziel-Netzknoten über dritte Kommunikationsgeräte 200 an Zwischen-Netzknoten innerhalb vorgegebener Zeitintervalle 10, 20 übermittelt. Dabei werden die vorgegebenen Zeitintervalle 10, 20 an allen Netzknoten synchronisiert. Für eine Weiterleitung der ausgewählten Datagramme 500, 500' wird jeweils eine Anzahl von Netzknoten vom jeweiligen Quell-Netzknoten zum jeweiligen Ziel-Netzknoten ermittelt. Bei einer zumindest einem vorgegebenen Schwellwert entsprechenden ermittelten Anzahl von Netzknoten werden die ausgewählten Datagramme 500, 500' während erster periodischer Zeitintervalle 10 mit einer ersten Schutzintervall-Länge 12 übermittelt. Im Gegensatz dazu werden die ausgewählten Datagramme 500, 500' bei einer unter dem Schwellwert liegenden ermittelten Anzahl während zweiter periodischer Zeitintervalle 20 mit einer zweiten Schutzintervall-Länge 22 übermittelt, die kürzer als die erste Schutzintervall-Länge 12 ist.

Die erste Schutzintervall-Länge 12 und die zweite Schutzintervall-Länge 22 werden in Abhängigkeit von ermittelten Latenzen bei einer Übermittlung der ausgewählten Datagramme 500, 500' von den Quell-Netzknoten zu den Ziel-Netzknoten festgelegt. Diese Latenzen 12, 22 umfassen Verzögerungen auf Links zwischen Netzknoten und in Bridges, Switches bzw. Routern und reduzieren eine nutzbare Bandbreite 11, 21 innerhalb der ersten bzw. zweiten Zeitintervalle. Aus Darstellungsgründen sind die Latenzen 12, 22 in Figur 2 im Vergleich zur jeweils nutzbaren Bandbreite 11, 21 deutlich größer als tatsächlich wiedergegeben. Qualitativ nehmen die Latenzen 12, 22 durchaus im Wesentlichen proportional mit steigender Netzknoten-Anzahl zu. Darüber hinaus sind die Latenzen in Bridges bzw. Switches mit Betriebsmodus "Store and Forward" abhängig von einer jeweiligen Datenrahmen-Länge (Frame Size).

Die ausgewählten Datagramme 500, 500' werden bei einer zumindest dem vorgegebenen Schwellwert entsprechenden ermittelten Anzahl von Netzknoten einer ersten Kategorie bzw. Datenstrom-Klasse zugeordnet, für deren Übermittlung erste System-Ressourcen innerhalb des Kommunikationsnetzes reserviert werden. Dagegen werden die ausgewählten Datagramme 500, 500' bei einer unter dem Schwellwert liegenden ermittelten Anzahl einer zweiten Kategorie zugeordnet, für deren Übermittlung zweite System-Ressourcen innerhalb des Kommunikationsnetzes reserviert werden. Vorzugsweise werden für ausgewählte Datagramme 500 der ersten Datenstrom-Klasse und für ausgewählte Datagramme 500' der zweiten Datenstrom-Klasse jeweils Kategorie-spezifische Time-aware Shaper gemäß IEEE 802.1 Qbv verwendet.

Entsprechend Figur 3 kann innerhalb eines Gesamt-Zeitrahmens 1 für eine periodische Übermittlung von Datenströmen und sonstigem Datenverkehr, insbesondere Best-effort Datenverkehr ohne Quality of Service Garantien, zwischen den ersten Zeitintervallen 10 und den zweiten Zeitintervallen 20 jeweils ein Pausen-Zeitfenster 2 vorgesehen sein. Ein entsprechendes Pausen-Zeitfenster 2 wird vorzugsweise auch zwischen zwei aufeinanderfolgenden Gesamt-Zeitrahmen 1 realisiert.

Zur Reservierung von durch dritte Kommunikationsgeräte 200 an Zwischen-Netzknoten für Multicast-Datenströme bereitzustellenden Ressourcen spezifizieren an die ersten Kommunikationsgeräte 201 angeschlossene Kommunikationsendgeräte 301 vorzugsweise jeweils Dienstgüteparameter. Für eine Reservierungsanfrage spezifizieren an die zweiten Kommunikationsgeräte 202 angeschlossene Kommunikationsendgeräte 302 jeweils einen Multicast-Datenstrom-Identifikator. Bei einer Reservierungsanfrage überprüfen bzw. überprüft die dritten Kommunikationsgeräte 200 bzw. die übergeordnete Steuerungseinrichtung 101, 102 jeweils, ob in den dritten Kommunikationsgeräten 200 entlang des jeweiligen Pfades ausreichende Ressourcen zur Datenübermittlung unter Einhaltung der spezifizierten Dienstgüteparameter verfügbar sind. Die durch die dritten Kommunikationsgeräte 200 bereitzustellenden bzw. bereitgestellten Ressourcen umfassen beispielsweise Bandbreite, Queue-Anzahl, Queue-Cache bzw. Adress-Cache des jeweiligen dritten Kommunikationsgeräts. Bei ausreichenden Ressourcen wird jeweils eine dem spezifizierten Multicast-Datenstrom-Identifikator zugeordnete Multicast-Adresse an ein anfragendes, an einen Ziel-Netzknoten angeschlossenes Kommunikationsendgerät übermittelt. Im vorliegenden Ausführungsbeispiel werden die Reservierungsanfragen entsprechend IEEE 802.1Qcc behandelt.

Eine Datenstrom-spezifische und klassifizierungsrelevante Netzknoten-Anzahl kann beispielweise als Hop Count durch ein Accumulated Latency Feld einer Talker Advertise Nachricht oder durch ein spezifisches TLV-codiertes (Type-Length-Value) Nachrichten-Attribut angegeben und dementsprechend ermittelt werden. Durch eine Überprüfung des Hop Count und eine Begrenzung einer Weiterleitung von Talker Advertise Nachrichten entsprechend einer maximalen Netzknoten-Anzahl für die jeweilige Datenstrom-Klasse kann eine deutlich bessere Bandbreitenausnutzung realisiert werden. Durch die Begrenzung der Weiterleitung von Talker Advertise Nachrichten können sich keine Listener an einem Datenstrom anmelden, wenn der Übertragungsweg im Netzwerk zu lang für die Ressourcenbetrachtung ist. Durch Berücksichtigung eines kleineren Latenz-bedingten Anteils für Zeitfenster zur Datenstrom-Übermittlung können entweder deutlich mehr Datenströme, insbesondere mit einer größeren Echtzeit-Datenmenge, reserviert werden, oder die Zeitfenster können verkleinert werden. Kleinere Zeitfenster sind bei Verwendung mehrerer Zeitfenster, insbesondere für unterschiedliche Klassen von Datenverkehr, in einen Kommunikationsnetz hilfreich, um mehrere Klassen-spezifische Zeitfenster realisieren zu können.

## Patentansprüche

1. Verfahren zur Datenübermittlung innerhalb eines industriellen Kommunikationsnetzes, bei dem
- ausgewählte Datagramme (500, 500') von an Quell-Netzknoten angeschlossenen ersten Kommunikationsgeräten (201) zu an Ziel-Netzknoten angeschlossenen zweiten Kommunikationsgeräten (202) innerhalb vorgegebener Zeitintervalle (10, 20) übermittelt werden,
- die vorgegebenen Zeitintervalle (10, 20) an allen Netzknoten synchronisiert werden,
**dadurch gekennzeichnet, dass**
- für eine Weiterleitung der ausgewählten Datagramme (500, 500') jeweils eine Anzahl von Netzknoten vom jeweiligen Quell-Netzknoten zum jeweiligen Ziel-Netzknoten ermittelt wird,
- die ausgewählten Datagramme (500, 500') bei einer zumindest einem vorgegebenen Schwellwert entsprechenden ermittelten Anzahl von Netzknoten während erster periodischer Zeitintervalle (10) mit einer ersten Schutzintervall-Länge (12) übermittelt werden,
- die ausgewählten Datagramme (500, 500') dagegen bei einer unter dem Schwellwert liegenden ermittelten Anzahl während zweiter periodischer Zeitintervalle (20) mit einer zweiten Schutzintervall-Länge (22) übermittelt werden, die kürzer als die erste Schutzintervall-Länge ist.

2. Verfahren nach Anspruch 1,
bei dem die ausgewählten Datagramme (500, 500') bei einer zumindest dem vorgegebenen Schwellwert entsprechenden ermittelten Anzahl von Netzknoten einer ersten Kategorie zugeordnet werden, für deren Übermittlung erste System-Ressourcen innerhalb des Kommunikationsnetzes reserviert werden, und bei dem die ausgewählten Datagramme (500, 500') bei einer unter dem Schwellwert liegenden ermittelten Anzahl einer zweiten Kategorie zugeordnet werden, für deren Übermittlung zweite System-Ressourcen innerhalb des Kommunikationsnetzes reserviert werden.

3. Verfahren nach Anspruch 2,
bei dem für ausgewählte Datagramme (500) der ersten Kategorie und für ausgewählte Datagramme (500') der zweiten Kategorie jeweils Kategorie-spezifische Time-aware Shaper gemäß IEEE 802.1 Qbv verwendet werden.

4. Verfahren nach einem der Ansprüche 2 oder 3,
bei dem zwischen den ersten Zeitintervallen (10) und den zweiten Zeitintervallen (20) jeweils ein Pausen-Zeitfenster (2) vorgesehen ist.

5. Verfahren nach einem der Ansprüche 1 bis 4,
bei dem die ersten Kommunikationsgeräte (201) über ein Time-sensitive Network (200), insbesondere entsprechend IEEE 802.1 Q und IEEE 802.1 Qbv, mit den zweiten Kommunikationsgeräten (202) verbunden sind.

6. Verfahren nach einem der Ansprüche 1 bis 5,
bei dem die ausgewählten Datagramme (500, 500') als Multicast-Datenströme über Zwischen-Netzknoten umfassende Pfade übermittelt werden, bei dem an die ersten Kommunikationsgeräte (201) angeschlossene Kommunikationsendgeräte (301) zur Reservierung von durch dritte Kommunikationsgeräte (200) an Zwischen-Netzknoten bereitzustellenden Ressourcen jeweils Dienstgüteparameter für die Multicast-Datenströme spezifizieren, bei dem an die zweiten Kommunikationsgeräte (202) angeschlossene Kommunikationsendgeräte (302) für eine Reservierungsanfrage jeweils einen Multicast-Datenstrom-Identifikator spezifizieren und bei dem die dritten Kommunikationsgeräte (200) und/oder eine übergeordnete Steuerungseinrichtung (101, 102) bei einer Reservierungsanfrage jeweils überprüfen/überprüft, ob in den dritten Kommunikationsgeräten (200) entlang des jeweiligen Pfades ausreichende Ressourcen zur Datenübermittlung unter Einhaltung der spezifizierten Dienstgüteparameter verfügbar sind.

7. Verfahren nach Anspruch 6,
bei dem bei ausreichenden Ressourcen jeweils eine dem spezifizierten Multicast-Datenstrom-Identifikator zugeordnete Multicast-Adresse an ein anfragendes, an einen Ziel-Netzknoten angeschlossenes Kommunikationsendgerät übermittelt wird.

8. Verfahren nach einem der Ansprüche 6 oder 7,
bei dem die durch die dritten Kommunikationsgeräte (200) bereitzustellenden Ressourcen Bandbreite, Queue-Anzahl, Queue-Cache und/oder Adress-Cache des jeweiligen dritten Kommunikationsgeräts umfassen.

9. Verfahren nach einem der Ansprüche 6 bis 8,
bei dem die Reservierungsanfragen entsprechend IEEE 802.1Qcc behandelt werden.

10. Verfahren nach Anspruch 9,
bei dem den an Quell-Netzknoten angeschlossenen Kommunikationsendgeräten (301) jeweils eine Talker-Funktion zugeordnet ist und bei dem den an Ziel-Netzknoten angeschlossenen Kommunikationsendgeräten (302) jeweils eine Listener-Funktion zugeordnet ist.

11. Verfahren nach einem der Ansprüche 1 bis 10,
bei dem die erste Schutzintervall-Länge (12) und die zweite Schutzintervall-Länge (22) in Abhängigkeit von ermittelten Latenzen bei einer Übermittlung der ausgewählten Datagramme (500, 500') von den Quell-Netzknoten zu den Ziel-Netzknoten festgelegt werden.

12. Kommunikationsgerät zur Durchführung des Verfahrens nach einem der Ansprüche 1 bis 11 mit
- mehreren Anschlüssen zur Verbindung mit weiteren Kommunikationsgeräten,
- einem Koppelelement, durch das die Anschlüsse schaltbar miteinander verbindbar sind,
- wobei das Kommunikationsgerät (200-202) dafür ausgestaltet und eingerichtet ist, ausgewählte Datagramme (500) von Quell-Netzknoten zu Ziel-Netzknoten innerhalb vorgegebener Zeitintervalle (10, 20) zu übermitteln,
- die vorgegebenen Zeitintervalle mit Kommunikationsgeräten (200-202) an anderen Netzknoten zu synchronisieren,
- für eine Weiterleitung der ausgewählten Datagramme (500) jeweils eine Anzahl von Netzknoten vom jeweiligen Quell-Netzknoten zum jeweiligen Ziel-Netzknoten zu ermitteln,
- die ausgewählten Datagramme (500) bei einer zumindest einem vorgegebenen Schwellwert entsprechenden ermittelten Anzahl von Netzknoten während erster periodischer Zeitintervalle (10) mit einer ersten Schutzintervall-Länge (12) zu übermitteln und bei einer unter dem Schwellwert liegenden ermittelten Anzahl dagegen während zweiter periodischer Zeitintervalle (20) mit einer zweiten Schutzintervall-Länge (22) zu übermitteln, die kürzer als die erste Schutzintervall-Länge ist.

## Claims

1. Method for data transmission within an industrial communication network, in which
- selected datagrams (500, 500') are transmitted from first communication devices (201), connected to source network nodes, to second communication devices (202), connected to destination network nodes, within predefined time intervals (10, 20),
- the predefined time intervals (10, 20) are synchronized at all network nodes,
**characterized in that**
- a number of network nodes from the respective source network node to the respective destination network node is ascertained for forwarding the selected datagrams (500, 500') each time,
- the selected datagrams (500, 500') are transmitted during first periodic time intervals (10) having a first guard interval length (12) if the ascertained number of network nodes at least corresponds to a predefined threshold value,
- on the other hand, the selected datagrams (500, 500') are transmitted during second periodic time intervals (20) having a second guard interval length (22), which is shorter than the first guard interval length, if the ascertained number is below the threshold value.

2. Method according to Claim 1,
in which the selected datagrams (500, 500') are assigned to a first category, for the transmission of which first system resources are reserved within the communication network, if the ascertained number of network nodes at least corresponds to the predefined threshold value, and in which the selected datagrams (500, 500') are assigned to a second category, for the transmission of which second system resources are reserved within the communication network, if the ascertained number is below the threshold value.

3. Method according to Claim 2,
in which category-specific time-aware shapers according to IEEE 802.1Qbv are used for selected datagrams (500) of the first category and for selected datagrams (500') of the second category each time.

4. Method according to either of Claims 2 and 3,
in which there is provision for a pause time window (2) between the first time intervals (10) and the second time intervals (20) each time.

5. Method according to one of Claims 1 to 4,
in which the first communication devices (201) are connected to the second communication devices (202) via a time-sensitive network (200), in particular in accordance with IEEE 802.1Q and IEEE 802.1Qbv.

6. Method according to one of Claims 1 to 5,
in which the selected datagrams (500, 500') are transmitted as multicast data streams via paths comprising intermediate network nodes, in which communication terminals (301) connected to the first communication devices (201) specify quality of service parameters for the multicast data streams each time in order to reserve resources to be provided to intermediate network nodes by third communication devices (200), in which communication terminals (302) connected to the second communication devices (202) specify a multicast data stream identifier for a reservation request each time, and in which, in the event of a reservation request, the third communication devices (200) and/or a superordinate control device (101, 102) check/checks each time whether there are sufficient resources available in the third communication devices (200) along the respective path for the purpose of data transmission while maintaining the specified quality of service parameters.

7. Method according to Claim 6,
in which, if there are sufficient resources, then a multicast address assigned to the specified multicast data stream identifier is transmitted each time to a requesting communication terminal connected to a destination network node.

8. Method according to either of Claims 6 and 7,
in which the resources to be provided by the third communication devices (200) comprise bandwidth, number of queues, queue cache and/or address cache of the respective third communication device.

9. Method according to one of Claims 6 to 8,
in which the reservation requests are handled in accordance with IEEE 802.1Qcc.

10. Method according to Claim 9,
in which the communication terminals (301) connected to source network nodes have an assigned talker function each time and in which the communication terminals (302) connected to destination network nodes have an assigned listener function each time.

11. Method according to one of Claims 1 to 10,
in which the first guard interval length (12) and the second guard interval length (22) are stipulated on the basis of ascertained latencies for a transmission of the selected datagrams (500, 500') from the source network nodes to the destination network nodes.

12. Communication device for performing the method according to one of Claims 1 to 11, having
- a plurality of connections for connection to further communication devices,
- a coupling element by means of which the connections are switchably connectable to one another,
- wherein the communication device (200-202) is designed and configured to transmit selected datagrams (500) from source network nodes to destination network nodes within predefined time intervals (10, 20),
- to synchronize the predefined time intervals with communication devices (200-202) at other network nodes,
- to ascertain a number of network nodes from the respective source network node to the respective destination network node for forwarding the selected datagrams (500) each time,
- to transmit the selected datagrams (500) during first periodic time intervals (10) having a first guard interval length (12) if the ascertained number of network nodes at least corresponds to a predefined threshold value and, on the other hand, to transmit said selected datagrams (500) during second periodic time intervals (20) having a second guard interval length (22), which is shorter than the first guard interval length, if the ascertained number is below the threshold value.

## Revendications

1. Procédé de transmission de données dans un réseau de communication industriel, dans lequel
- on transmet des datagrammes (500, 500') sélectionnés de premiers appareils (201) de communication, raccordés à des nœuds de réseau source, à des deuxièmes appareils (202) de communication, raccordés à des nœuds de réseau cible, dans des intervalles (10, 20) de temps donnés à l'avance,
- on synchronise les intervalles (10, 20) de temps donnés à l'avance sur tous les nœuds du réseau,
**caractérisé en ce que**
- pour un acheminement des datagrammes (500, 500') sélectionnés, on détermine respectivement un nombre de nœuds de réseau du nœud de réseau source respectif au nœud de réseau cible respectif,
- on transmet, pendant des premiers intervalles (10) de temps périodiques ayant une première longueur (10) d'intervalle de protection, les datagrammes (500, 500') sélectionnés pour un nombre, déterminé correspondant à au moins une valeur de seuil donnée à l'avance, de nœuds de réseau,
- on transmet les datagrammes (500, 500') sélectionnés en revanche pour un nombre déterminé, se trouvant en-dessous de la valeur de seuil, pendant des deuxièmes intervalles (20) de temps périodiques ayant une deuxième longueur (22) d'intervalle de protection qui est plus courte que la première longueur d'intervalle de protection.

2. Procédé suivant la revendication 1,
dans lequel on associe les datagrammes (500, 500') sélectionnés, pour un nombre déterminé, correspondant au moins à la valeur de seuil donnée à l'avance, de nœuds de réseau à une première catégorie, pour la transmission de laquelle on réserve de premières ressources de système dans le réseau de communication, et dans lequel on associe les datagrammes (500, 500') sélectionnés pour un nombre déterminé, inférieur à la valeur de seuil, à une deuxième catégorie, pour la transmission de laquelle on réserve des deuxièmes ressources de système dans le réseau de communication.

3. Procédé suivant la revendication 2,
dans lequel on utilise pour des datagrammes (500) sélectionnés de la première catégorie et pour des datagrammes (500') sélectionnés de la deuxième catégorie respectivement Time-aware Shaper suivant IEEE 802.1 Qbv spécifique à une catégorie respective.

4. Procédé suivant l'une des revendications 2 ou 3,
dans lequel il est prévu respectivement un créneau (2) temporel de pause entre les premiers intervalles (10) de temps et les deuxièmes intervalles (20) de temps.

5. Procédé suivant l'une des revendications 1 à 4,
dans lequel les premiers appareils (201) de communication sont reliés par un Time sensitive Network (200), notamment conformément à IEEE 802.1 Q et IEEE 802.1 Qbv, aux deuxièmes appareils (202) de communication.

6. Procédé suivant l'une des revendications 1 à 5,
dans lequel on transmet les datagrammes (500, 500') sélectionnés sous la forme de flux de données multicast par des trajets comprenant des nœuds de réseau intermédiaires, dans lequel des terminaux (301) de communication, raccordés aux premiers appareils (201) de communication, spécifient pour la réservation de ressources à mettre à disposition par des troisièmes appareils (200) de communication aux nœuds de réseaux intermédiaires, respectivement des paramètres de qualité de service pour les flux de données multicast, dans lequel des terminaux (302) de communication, raccordés aux deuxièmes appareils (202) de communication, spécifient, pour une demande de réservation respectivement un identifiant de flux de données multicast et dans lequel les troisièmes appareils (200) de communication et/ou un dispositif (101, 102) de commande supérieure hiérarchiquement contrôlent/contrôle respectivement, lors d'une demande de réservation, si sont disponibles dans les troisièmes appareils (200) de communication des ressources suffisantes le long du trajet respectif pour la transmission de données en maintenant les paramètres de qualité de service spécifiés.

7. Procédé suivant la revendication 6,
dans lequel pour des ressources suffisantes, on transmet respectivement une adresse multicast associée à l'identifiant de flux de données multicast spécifié à un terminal de communication demandeur, raccordé à un nœud de réseau cible.

8. Procédé suivant l'une des revendications 6 ou 7,
dans lequel les ressources à mettre en disposition par des troisièmes appareils (200) de communication comprennent une largeur de bande, un nombre de queue, un cache de queue et/ou du cache d'adresse du troisième appareil de communication respectif.

9. Procédé suivant l'une des revendications 6 à 8,
dans lequel on traite les demandes de réservation conformément à IEEE 802.1Qcc.

10. Procédé suivant la revendication 9,
dans lequel aux terminaux (301) de communication, raccordés aux nœuds de réseau source, est associée respectivement une fonction Talker et dans lequel aux terminaux (302) de communication, raccordés aux nœuds de réseau cible, est associée respectivement une fonction Listener.

11. Procédé suivant l'une des revendications 1 à 10,
dans lequel on fixe la première longueur (12) d'intervalle de protection et la deuxième longueur (22) d'intervalle de protection en fonction des latences déterminées lors de la transmission des datagrammes (500, 500') sélectionnés des nœuds de réseau source aux nœuds de réseau cible.

12. Appareil de communication pour effectuer le procédé suivant l'une des revendications 1 à 11 comprenant
- plusieurs bornes de liaison à d'autres appareils de communication,
- un élément de couplage, par lequel les bornes peuvent être reliées entre elles avec possibilité de commutation,
- dans lequel l'appareil (200 à 202) de communication est conformé et conçu pour transmettre des datagrammes (500) sélectionnés de nœuds de réseau source à des nœuds de réseau cible dans des intervalles (10, 20) de temps donnés à l'avance,
- pour synchroniser des intervalles de temps donnés à l'avance à des appareils (200 à 202) de communication sur d'autres nœuds de réseau,
- pour déterminer pour un acheminement des datagrammes (500) sélectionnés respectivement un nombre de nœuds de réseau du nœud de réseau source respectif au nœud de réseau cible respectif,
- pour transmettre des datagrammes (500) sélectionnés, pour un nombre déterminé, correspondant au moins à une valeur de seuil donnée à l'avance, de nœuds de réseau pendant de premiers intervalles (10) de temps périodiques ayant une première longueur (12) d'intervalle de protection, et pour les transmettre, pour un nombre déterminé inférieur à la valeur de seuil en revanche pendant des deuxièmes intervalles (20) de temps périodiques ayant une deuxième longueur (22) d'intervalle de temps de protection, qui est plus courte que la première longueur d'intervalle de protection.
